# EUROPEAN PATENT SPECIFICATION

(11) **EP 1 939 969 B1**
(45) Date of publication and mention of the grant of the patent: **20.01.2010**
(21) Application number: 08000453.4
(22) Date of filing: 27.04.2006
(51) Int. Cl.: H01M 10/04, H01M 10/14

(54) **An enveloper for a battery plate**
Kuvertiergerät für eine Batterieplatte
Dispositif d'enveloppement pour une plaque de batterie

(30) Priority: 12.05.2005 GB 0509645
(43) Date of publication of application: 02.07.2008
(62) Divisional of application: 06252258.6
(73) Proprietor: TBS ENGINEERING LIMITED, Cheltenham, Gloucestershire GL51 9TY (GB)
(72) Inventor: Hopwood, Robert Timithy, Highbridge Somerset TA9 3RH (GB); Barge, Christopher Stephen, Stapleton Bristol BS16 1WL (GB); Phillips, Mark, Cheltenham Glos GL52 8TG (GB)
(74) Representative: Dunlop, Brian Kenneth Charles

(56) References cited:
- WO-A-92/02055
- US-A- 4 314 403
- US-B1- 6 585 846

## Description

This invention relates to envelopers for creating a material envelope around a battery plate and apparatus for forming groups of battery plates.

In the manufacturer of lead acid, and similar, batteries it is known to have to assemble groups of battery plates for insertion in the compartments of the battery box. Frequently alternate plates are enveloped in porous separator material, although at times it is necessary that adjacent plates are both enveloped or that there may be an unenveloped pair in the group. Apparatus is therefore provided for assembling appropriate groups and typically there is an upstream plate feeder, which feeds plates onto a central conveyor upstream of an enveloper, which envelopes the plates coming down that section of the conveyor. One or more further plate feeders are provided downstream of the enveloper so that the desired sequence of enveloped and unenveloped plates travel down the conveyor. Conveniently these may be timed to form mini stacks of plates e.g. positive and negative plates, with one enveloped and one not. At the end of the main conveyor the plates pass into a pocketed conveyor, which is timed to receive the desired group of plates within its respective pocket.

Developments, such as those described in European Patent Application 05250059.2 have enabled such group forming apparatus to operate at significant speeds and with reduced labour. However, these developments have, in a sense, highlighted difficulties both with the precision of existing envelopers and the downtime and labour required to convert such group forming apparatus when it is necessary to process different plate sizes and/or different enveloping materials. At present such work has to be carried out, on each occasion, by a highly skilled fitter. WO92/02055 shows a known enveloper.

The invention consists in an enveloper for forming a material envelope around a battery plate, including a pair of feed rollers, a cut-and-crease station and an envelope forming station **characterised in that** the enveloper further includes a tension roller for tensioning the material prior to cutting and located downstream of the cut-and-crease station but upstream of the envelope forming station.

Preferably the tension roller is driven by a servomotor or via the feed rollers.

Preferably the servomotor is controlled by a control having a memory for retaining the appropriate tension setting for a particular material.

The invention extends to apparatus for forming groups of battery plates including a first plate supply for supplying successive spaced plates, an enveloper as mentioned in any one of the preceding three paragraphs for enveloping in material the plates from the first supply, a second plate supply for supplying unenveloped plates, to form stacks of an enveloped plate and an unenveloped plate, a conveyor for conveying the stacks to an outlet and a pocket conveyor for receiving multiple stacks from the outlet for forming groups **characterised in that** at least a plurality of the above elements has at least one adjustable feature controlled by a respective servomotor to allow for different plate envelope material combinations and a control for adjusting the servomotors.

Preferably the control includes a memory for retaining the control settings for each plate/envelope combination used in the apparatus to allow automatic re-setting of the apparatus.

The invention may be performed in various ways and specific embodiments will now be described, by way of example, with respect to the accompany drawings, in which:
Figure 1 is a planned view of apparatus for forming groups of battery plates;
Figure 2 is a side view of the apparatus of Figure 1;
Figure 3 is a vertical section through an enveloper for use in the apparatus of Figures 1 and 2;
Figures 4a to 4g are schematic views from the side, indicating the operation of the enveloper of Figure 3, but viewed from the other side;
Figures 5a and 5b indicate relative adjustment between an anvil and a cut-and-crease roller of the enveloper of Figure 3;
Figures 6a and 6b indicate the use of a servomotor to achieve that adjustment;
Figure 7 is a side view of the enveloper of Figure 3 when viewed from the opposite side to Figure 3; and
Figure 8 is a schematic diagram of a control system for the apparatus, but showing a single line.

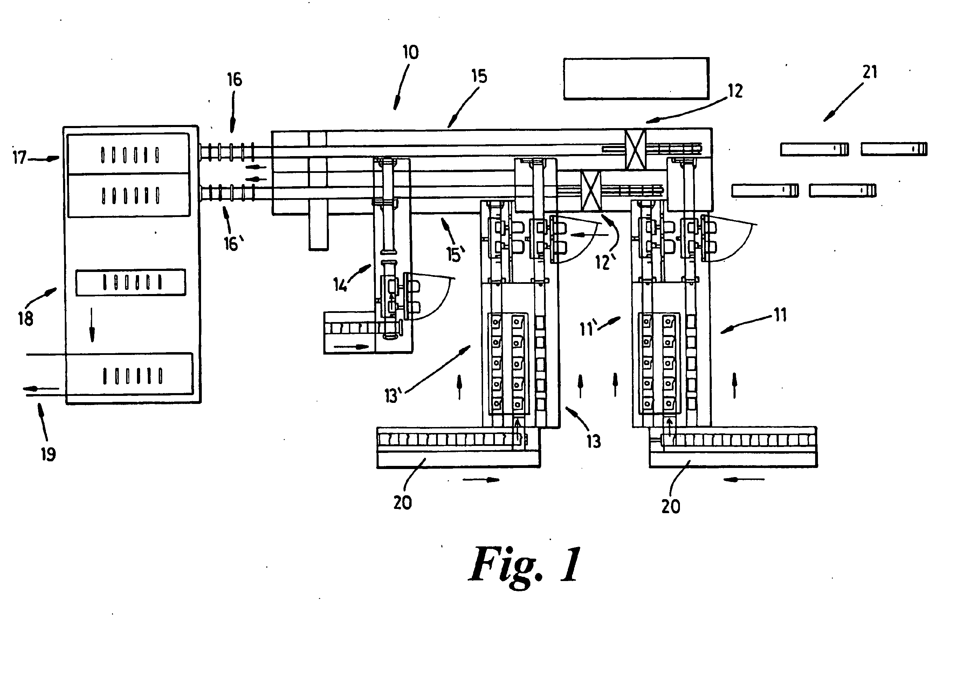

In Figure 1 the apparatus for forming groups is generally indicated at 10 and includes upstream plate supplies 11, 11', envelopers 12, 12', first downstream plate supplies, 13, 13' and an auxiliary plate supply 14. Plate supplies 11, 11' and 13, 13' deliver plates onto respective main conveyors, 15, 15'. Auxiliary plate supply 14, which is more occasionally used, can supply plates onto both conveyors 15, 15'. Plates supplied onto the main conveyors 15, 15' are enveloped at 12, 12' by material taken from reels 21. For many batteries, alternate enveloped and unenveloped plates are required and so the supplies 13, 13' insert an unenveloped plate either between each enveloped plate, or, more conveniently, onto an enveloped plate to form a mini stack. The supply 14 can be used to introduce plates so that they will lie either on top of the unenveloped plate on the stack of effectively lie below the enveloped plate. If a pair of enveloped plates are required immediately adjacent to each other, then the supply 13 is momentarily stopped. Conveyors 15, 15' feed stackers 16, 16' which then enter the buffer 17. Apparatus 18 picks up the groups formed by the stackers 16, 16' alternatively and in this way supply groups to the cast-on strap feed 19, where the groups move forward to a cast-on strap machine (not shown).

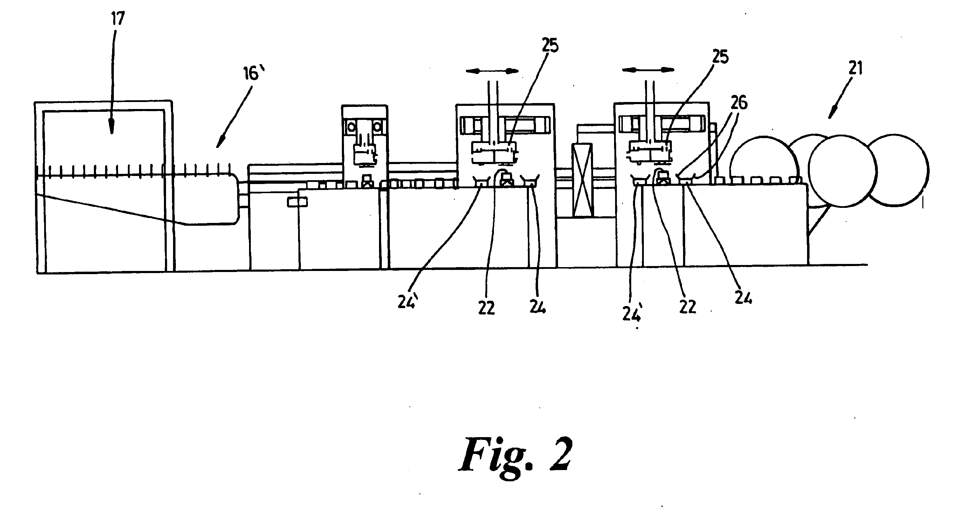

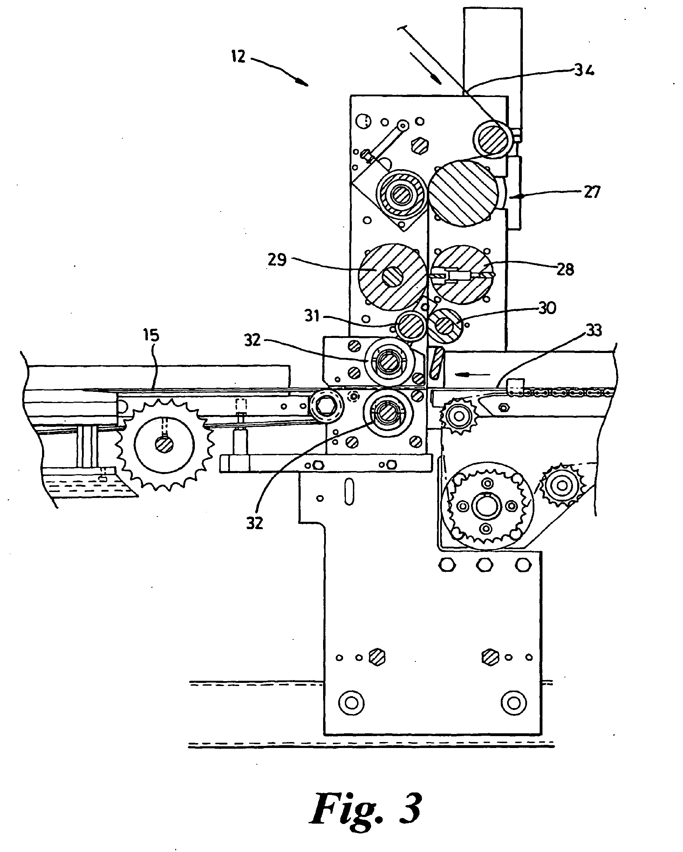

As can best be seen in Figure 2 supplies 11, 11' and 13, 13' have a central conveyor 22 from which plates are picked up by a respective head 25, which then laterally translates to deposit plates onto a conveyor 24', whilst further plates have been picked up for later deposition on conveyor 24' as the head 25 translates in the other direction. It will be seen that each conveyor 24, 24' has guides 26. As is explained below, these may be adjustable. Similar guides exist elsewhere in the apparatus 10. Figure 3 illustrates an enveloper 12, 12' and briefly consists of feed rollers 27 cooperative cut-and-crease roller 28 and anvil 29, a control driven roller 30 and a cooperating idler roller 31, a pair of sealing wheels 32, which include tooth formations for crimping the edges of the envelope in a manner known in the art, and a reciprocating shuttle for feeding the plate off the conveyor 15 towards the sealing rollers 32. The passage of material 34, from the reels 21, through the enveloper 12, 12' is indicated.

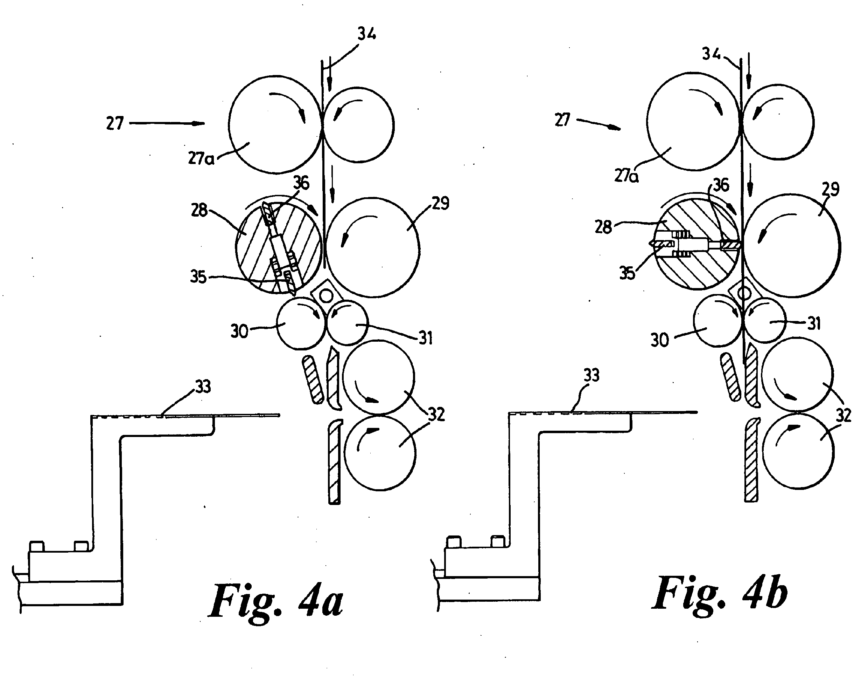

The operation of the enveloper is progressively illustrated in Figures 4a to 4g. In broad outline the enveloper 12 operates in a conventional manner with the feed rollers 27 feeding the material 34 into the nip between the cut-and-crease roller 28 and the anvil 29, the cut-and-crease roller 28 has a knife 35 and a crease blade 36, which is set into the roller at diametrically opposed positions. This position is shown in Figure 4a. As the cut-and-crease roller 28 rotates, the crease blade 36 forms a crease in the material, by acting against the anvil 29, as it passes through the nip between the roller 28 and the anvil 29. This position is shown in Figure 4b.

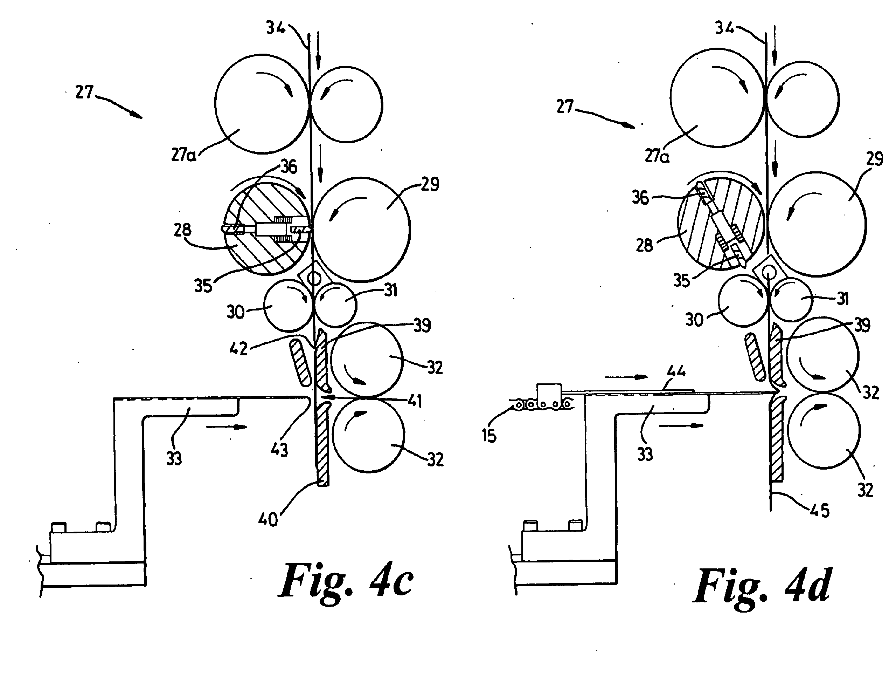

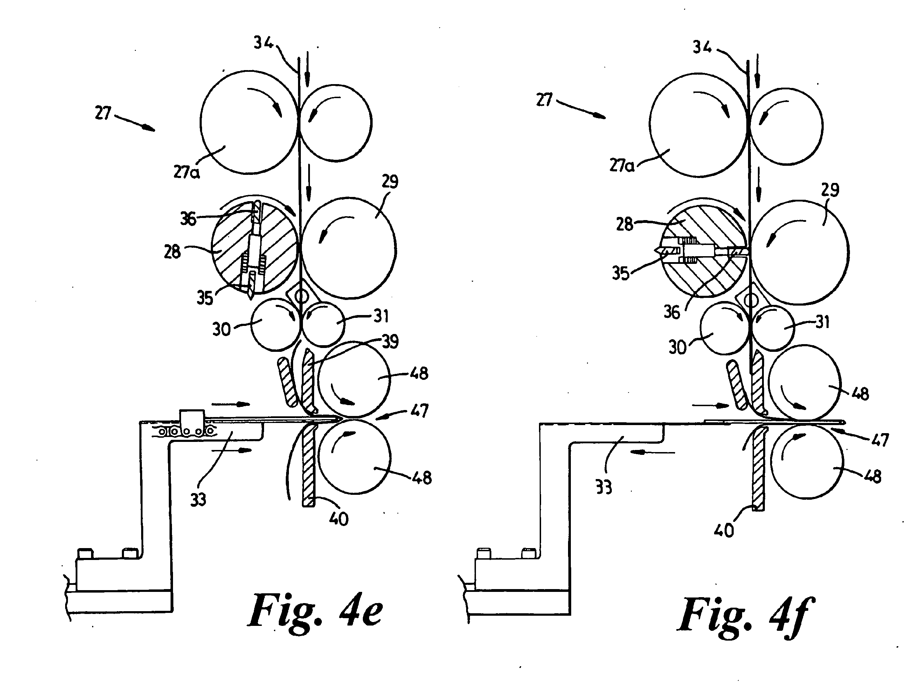

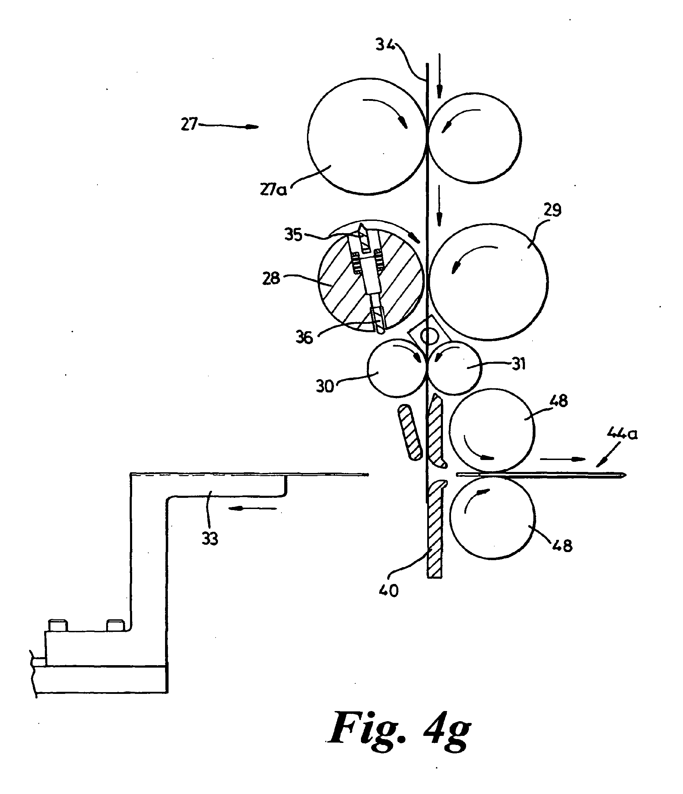

The crease material continues to be fed downwardly past the guides 39, 40, which define a horizontal slot 41 (see Figure 4c). At this point the knife 35 cuts the material against the anvil 29 and the cut material continues to descend past the slot 41 until the crease 42 is aligned with the slot 41. During this period the shuttle 33 has begun to advance towards the slot 41 and as the crease 42 becomes aligned with the slot 41 the leading edge 43 of the shuttle 33 engages in the crease 42 to begin to push the crease into the slot 41. At the same time a plate 44 is delivered onto the shuttle by conveyor 15 (see Figure 4d). As is illustrated in Figure 4e the shuttle 33 carries the plate 44 and the cut piece of material 45 through the slot 41 causing the material 45 to fold around the plate 44 and delivering the material and plate into the nip 47 of two sealing rollers 48 that remove the plate 44 and material 45 from the now retracting shuttle 33 (see Figure 4f) to deliver the fully enveloped plate 44a as shown in Figure 4g. The edges of the cut material 45 are crimped together using toothed wheels in a manner known to those skilled in the art.

As described above the elements of the enveloper are entirely conventional, but the Applicants' enveloper has a number of significant differences over the prior art. These will be discussed as follows:

### Crease position adjustment

As has been mention above there are considerable difficulties with conventional machines in setting up the precise circumferential position of the crease blade 36 to ensure that the crease 42 occurs in the right position in the cut piece of material 45. This is because, whilst the section of the material 45, which passes between the roller 28 and anvil 29 between the leading cut and the engagement by the crease blade 36, is free of drag, the crease blade 36 drags the material 45 for a short time setting up the difference in the time the trailing half of the material takes to pass through the nip. Differences in the thickness, profiling and chemical make-up of the enveloping material 34 can result in the crease 42 being formed either too early or too late resulting in the "short on top" and "long on top" conditions discussed earlier. The Applicants have appreciated that surprisingly the very difficult process of altering the crease blade position using shims, which is currently undertaken, can be completely dispensed with by leaving the crease blade where it is and altering the rotational velocity of the cut-and-crease roller 28 during its cycle. If the roller is slowed between the times at which the leading edge of a section of material 45 is cut by the knife 35 and the arrival of the crease blade 36 at the anvil 29, then the underlying piece of the material 45 will be lengthened, compensating for a "long on top" condition. Conversely if this period is shortened, there will be compensation of a "short on top" condition.

Such a driving arrangement could be achieved in a number of ways, but it is particularly convenient to use a servomotor, which can be computer controlled. In this way an operator can adjust the computer control, which will be described in more detail below, to achieve symmetrically enveloped plates. In doing so he records the plate size and material being processed and this setting will be retained by the computer control to allow automatic resetting whenever the operator wants to run that combination through the apparatus again.

### Envelope length adjustment

For different size plates different lengths of envelope may be required and the Applicants have appreciated that by closely controlling the rotational speed of the feed rollers 27, the length of material, that passes between the cut-and-crease roller 28 and anvil 29 in a rotational cycle of the knife 35, is dependent on the speed with which the material is fed. Accordingly by driving the driven feed roller 27a with a servomotor this speed can be closely controlled and the appropriate setting can again be stored for subsequent automatic resetting. As some of the enveloping materials stretch under tension, it may again be desirable to have a non-constant rotational speed of the roller 27a during a single cycle or group of cycles to compensate for such stretching.

### Crease depth adjustment

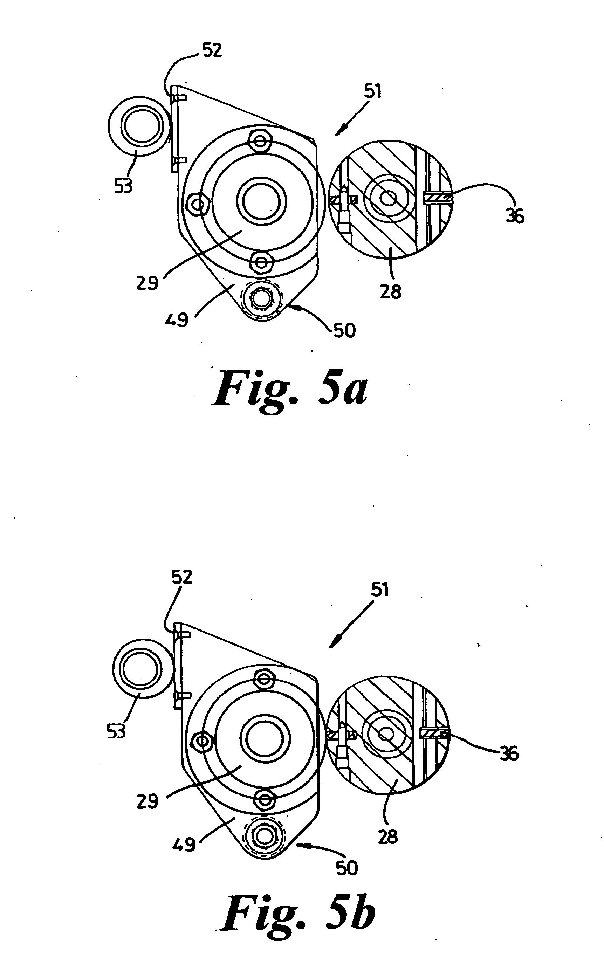

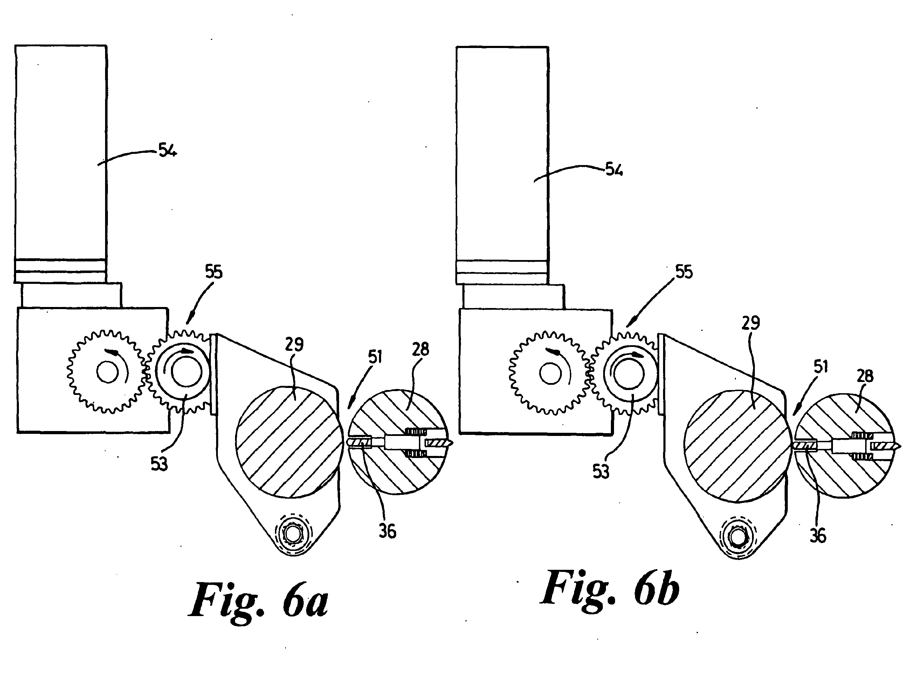

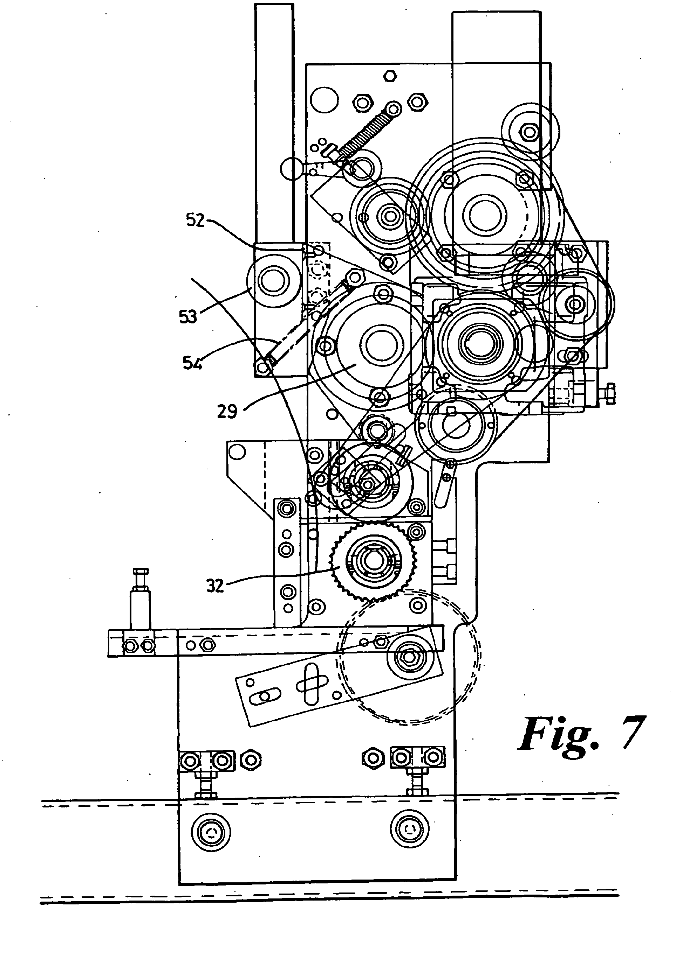

The possibility for adjusting the crease depth is best illustrated in Figures 5 to 7, which view the enveloper 12 from the opposite side to the views shown in Figures 3 and 4. Figure 7 is a view of the complete operational layout, but the arrangement can most simply be seen in Figures 5 and 6. These show that the anvil 29 is mounted on a carrier plate 49, which is itself pivotally mounted at 50. Rocking of the carrier plate about the pivot 50 can vary the width of the gap or nip 51 which exists between the anvil 29 and the cut-and-crease roller 28. The width of the gap 51 determines the depth of the crease formed in the material for a fixed position of the crease blade 36.

On the opposite side of the gap 51, from the pivot 50, the carrier plate 49 has a cam following plate 52 which is located to engage a rotatable eccentric 53. (As can be seen in Figure 7 a spring 54 is provided to urge the plate 52 against the eccentric 53). As can be seen in Figures 5(a) and (b) and 6 (a) and (b) in the Applicants' particular arrangement the gap 51 can vary between 2.3 mm and 0 mm depending on the rotational position of the eccentric 53. Figure 6 illustrates the drive for the eccentric 53 which comprises a servomotor 54a and gear chain 55. The anvil position can therefore be adjusted by the servomotor 54 and the appropriate anvil position for any particular plate/material combination can be stored. This adjustment of the anvil position needs to be compensated for in connection with the knife 35. Spring loading the knife 35 is sufficient in most cases.

### Tension control

Returning to Figure 4, conventional envelopers use an idler roller acting against the upper one of the sealing wheels 32 to retain the cut material as it passes down to be pushed between the rollers 32 by the shuttle 33. The Applicants have appreciated that there are two disadvantages of this system. First the tension in the pre-cut material 34 cannot be controlled, leading to inaccuracies in envelope length and cut-and-crease positions, and further the rate at which the cut section of the material 45 is fed down towards the sealing rollers 32 cannot be controlled. The Applicants have therefore incorporated the driven control roller 30 with the idler 31, which together, as can be seen in the sequential diagrams in Figure 4, initially tension the material 34 and subsequently control the rate of feed of the material 45. Conveniently the roller 30 is driven through the feed roller 27a through a slightly stepped up gear chain. Alternatively a servomotor may be used. Either way the rate of rotation of the roller 30 can be precisely controlled and maybe varied depending on whether it is being used to tension the material 34 or feed the material 45. Again the settings for the servomotor can be adjusted on setup and stored for subsequent automatic setup.

The applicants have determined that in fact in may be advantageous to remove the vertical plates which define the nip 41. This is because the crease can sometimes be misplaced by differential friction arising between the material 45 and the respective plates. In fact, the formation of the crease tends to be enhanced, because the material gets deflected against the rollers 32, helping formation of the crease.

### Full machine control

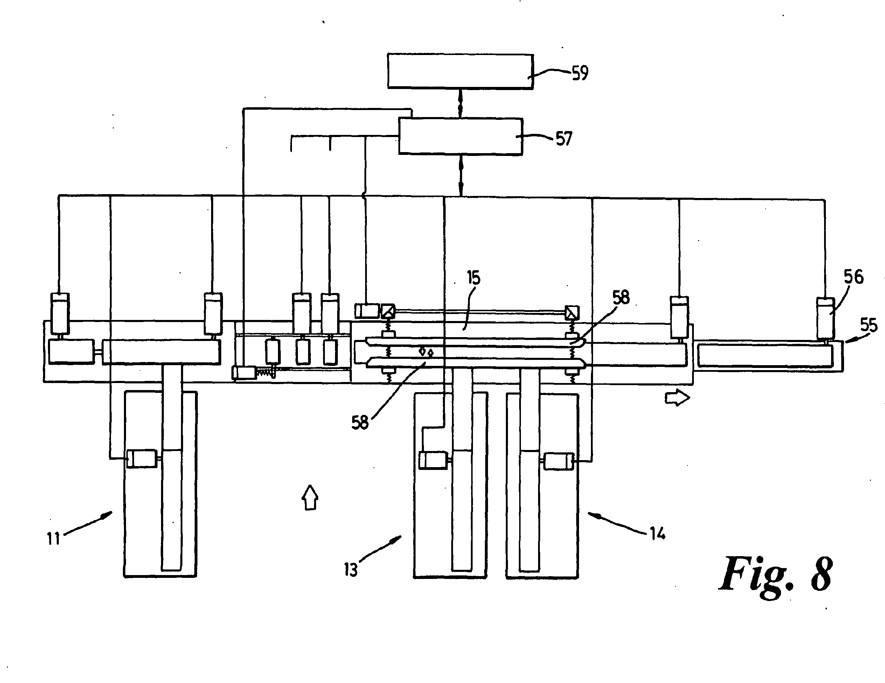

Figure 8 is a controlled diagram for the apparatus 10. It will be noted that servomotors are used throughout the apparatus both as described above, and also to control the speed of the various conveyors and also, at, 55 a servomotor 56 is provided for adjusting the spacing of the pockets on the pocket conveyor 16. Further servomotors are provided to adjust guides 22 and 58. The servomotors are all controlled by a servodrive control system 57 which in turn can be operator controlled through an interface 58. This use of servomotors and controls also enables precise relative adjustments between the operating speeds of the various parts of the apparatus. Thus, in complete contrast to industry practice the Applicants have envisaged the apparatus as a single entity with a large number of controllable adjustable features, rather than considering each element of the apparatus as being a completely independent device, which requires individual setting up by a skilled operator each time the plate/material combination is changed. Not only have the Applicants achieved a way of allowing a machine to be automatically set up, once a "recipe" has been determined for any particular plate material combination they have also created apparatus which could be, at least in part, dynamically controlled, in real time, to self adjust to allow for manufacturing variations in the plates or material.

## Claims

1. An enveloper for forming a material envelope around a battery plate, including a pair of feed rollers (27), a cut-and-crease station and an envelope forming station **characterised in that** the enveloper further includes a tension roller (30) for tensioning the material prior to cutting and located downstream of the cut-and-crease station but upstream of the envelope forming station.

2. An enveloper as claimed in Claim 1, wherein the tension roller (30) is driven by a servomotor or via the feed rollers (27).

3. An enveloper as claimed in Claim 2, wherein the servomotor is controlled by a control (57) having a memory for retaining the appropriate tension setting for a particular material.

4. Apparatus for forming groups of battery plates including a first plate supply for supplying successive spaced plates, an enveloper (12) as claimed in any one of the preceding claims for enveloping in material the plates from the first supply (11), a second plate supply (13) for supplying unenveloped plates, to form stacks of an enveloped plate and an unenveloped plate, a conveyor (15) for conveying the stacks to an outlet (16) and a pocket conveyor for receiving multiple stacks from the outlet for forming groups **characterised in that** at least a plurality of the above elements has at least one adjustable feature controlled by a respective servomotor to allow for different plate envelope material combinations and a control for adjusting the servomotors.

5. Apparatus as claimed in Claim 4, wherein the control (57) includes a memory for retaining the control settings for each plate/envelope combination used in the apparatus to allow automatic re-setting of the apparatus.

## Patentansprüche

1. Umhüllungsvorrichtung zur Bildung einer Materialumhüllung um eine Batterieplatte herum, die ein Paar von Zuführwalzen (27), eine Schneid-und-Rill-Station und eine Umhüllungsbildungsstation aufweist, **dadurch gekennzeichnet, dass** die Umhüllungsvorrichtung weiterhin eine Spannwalze (30) zum Spannen des Materials vor dem Schneiden aufweist, die stromabwärts von der Schneid-und-Rill-Station, aber stromaufwärts der Umhüllungsbildungsstation angeordnet ist.

2. Umhüllungsvorrichtung nach Anspruch 1, wobei die Spannwalze (30) durch einen Servomotor oder über die Zuführwalzen (27) angetrieben wird.

3. Umhüllungsvorrichtung nach Anspruch 2, wobei der Servomotor durch eine Steuerung (57) gesteuert wird, die einen Speicher zum Speichern der geeigneten Spannungseinstellung für ein bestimmtes Material aufweist.

4. Vorrichtung zur Bildung von Gruppen von Batterieplatten, die eine erste Plattenzuführung zum Zuführen von aufeinander folgenden, im Abstand angeordneten Platten, eine Umhüllungsvorrichtung (12) gemäß einem der vorhergehenden Ansprüche zum Umhüllen der Platten von der ersten Zuführung (11) in Material, eine zweite Plattenzuführung (13) zum Zuführen von unumhüllten Platten zur Bildung von Stapeln aus einer umhüllten Platte und einer unumhüllten Platte, eine Fördereinrichtung (15) zum Fördern der Stapel zu einem Auslass (16) und einen Taschenförderer zum Aufnehmen vielfacher Stapel von dem Auslass zur Bildung von Gruppen aufweist, **dadurch gekennzeichnet, dass** wenigstens eine Vielzahl der obigen Elemente wenigstens ein einstellbares Merkmal, das durch einen jeweiligen Servomotor gesteuert wird, zur Ermöglichung unterschiedlicher Plattenumhüllungsmaterialkombinationen und eine Steuerung zur Einstellung der Servomotoren aufweist.

5. Vorrichtung nach Anspruch 4, wobei die Steuerung (57) einen Speicher zum Speichern der Steuerungseinstellungen für jede in der Vorrichtung verwendete Platten-/Umhüllungs-Kombination aufweist, um ein automatisches Neueinstellen der Vorrichtung zu ermöglichen.

## Revendications

1. Dispositif d'enveloppement pour former une enveloppe de matériau autour d'une plaque de batterie, comprenant une paire de rouleaux d'alimentation (27), un poste de découpe et pliage et un poste de formation d'enveloppe, **caractérisé par le fait que** le dispositif d'enveloppement comprend en outre un rouleau de tension (30) pour mettre en tension le matériau avant la découpe et situé en aval du poste de découpe et pliage mais en amont du poste de formation d'enveloppe.

2. Dispositif d'enveloppement selon la revendication 1, dans lequel le rouleau de tension (30) est entraîné par un servomoteur ou par l'intermédiaire des rouleaux d'alimentation (27).

3. Dispositif d'enveloppement selon la revendication 2, dans lequel le servomoteur est commandé par une commande (57) ayant une mémoire pour retenir le réglage de tension approprié pour un matériau particulier.

4. Appareil de formation de groupes de plaques de batterie comprenant une première alimentation en plaques pour introduire des plaques espacées successives, un dispositif d'enveloppement (12) selon l'une quelconque des revendications précédentes pour envelopper dans le matériau les plaques provenant de la première alimentation (11), une seconde alimentation en plaques (13) pour introduire des plaques non enveloppées, pour former des empilements d'une plaque enveloppée et d'une plaque non enveloppée, un transporteur (15) pour transporter les empilements vers une sortie (16) et un transporteur à poches pour recevoir les différents empilements provenant de la sortie pour former des groupes, **caractérisé par le fait qu'**au moins une pluralité des éléments ci-dessus a au moins une caractéristique ajustable contrôlée par un servomoteur respectif pour permettre différentes combinaison matériau d'enveloppe de plaque et une commande pour ajuster les servomoteurs.

5. Appareil selon la revendication 4, dans lequel la commande (57) comprend une mémoire pour retenir les réglages de commande pour chaque combinaison plaque/enveloppe utilisée dans l'appareil pour permettre un re-réglage automatique de l'appareil.
